# EUROPEAN PATENT APPLICATION

(11) **EP 3 656 750 A2**
(43) Date of publication of application: **27.05.2020**
(21) Application number: 20165387.0
(22) Date of filing: 24.03.2020
(51) Int. Cl.: C04B 14/26, C04B 14/28, C04B 20/02, C04B 22/10, C04B 7/36, C04B 40/02

(54) **USE OF CARBON DIOXIDE FROM AND FOR CEMENT**

(71) Applicant: HeidelbergCement AG, 69120 Heidelberg (DE)
(72) Inventor: DIENEMANN, Wolfgang, 69256 Mauer (DE); THEULEN, JAN, 6061 CE Posterholt (NL); ZAJAC, Maciej, 69126 Heidelberg (DE); SKOCEK, Jan, 69181 Leimen (DE); BEN HAHA, Mohsen, 69117 Heidelberg (DE)
(74) Representative: Zellentin & Partner mbB Patentanwälte

(57) **Abstract**

Method of utilizing carbon dioxide containing gas arising as waste or by-product in one or more of the following industrial processes:
- cement clinker production such as rotary kilns and/or calciner stages, oxyfuel kiln lines, or from separate calcination devices or indirect calcination of the calcium carbonate,
- carbon capture technologies, such as amine-based CO₂ scrubber and membrane-based gas separation,
for providing a useful carbonation product by one or more of the following production steps:
- carbonation of concrete demolition waste, especially recycled concrete fines, for the production of SCM or calcite and active silica,
- carbonation of industrial materials, e.g. fly ashes, slags and other, for the production of SCM or calcite and active silica,
- carbonation of natural materials, e.g. olivine, serpentine, talc, MgO-containing minerals, and other, for the production of SCM or calcite and active silica, and
- carbonation hardening of binders,
wherein the production step is selected based on the amount of carbon dioxide in the carbon dioxide containing gas, the additional substances present in the carbon dioxide containing gas and a temperature and pressure of the carbon dioxide containing gas.

## Description

The present invention relates to a method for utilization of carbon dioxide, for example low to high concentration carbon dioxide in exhaust gases and/or arising in the cement industry, as well as to carbonation of products obtained by the method.

In the past carbon dioxide emission has constantly increased which is held responsible by many for climate change, specifically global warming. Therefore, numerous attempts and concepts were developed to stop the increase of carbon dioxide concentration in the atmosphere or ideally to reduce it.

Especially the cement industry is confronted with high CO₂ emissions related to the production of cement clinker. Cement is a widely used and versatile building material. However, the manufacturing of the most common cement, Portland cement (OPC), consumes considerable amounts of mineral raw materials and energy (fuel). Thus, there is a long and partly very successful history of replacing the valuable natural resources mineral raw material like limestone and fuels like coal by waste, of substituting cement clinker with supplementary cementitious material (SCM) and finding alternative cements.

A major part of CO₂ emissions related to the clinker production originates from raw materials used, i.e. from limestone. Unfortunately, environmentally friendlier alternatives to limestone do not exist at sufficiently large scale, reduction of the raw material emissions by limestone substitution is not possible.

Reduction of cement and concrete industry environmental footprint by utilization of industrial by-products used as SCMs has reached global availability limits of these materials. Furthermore, the availability of the two most important SCMs - fly ashes and blast furnace slags - is expected to decrease with the progressing decarbonisation of the electricity sector and increased steel recycling, respectively. As a result, e.g. limestone and potentially clays, that need to be calcined, are options for SCMs available in sufficient amounts to meet the increasing cement demands. However, the production of calcined clay is often causing significant CO₂ emissions as well.

Additionally, the clinker replacement by SCMs is limited by technical requirements on the final product such as high early strength and as well by the chemical reactions taking place - without clinker, pozzolanic SCMs are inert. Thus, without further development Portland clinker will remain to be the major constituent of hydraulic cements.

The CO₂ emissions may be limited by the further optimization of the cement clinker production. Such development is limited because of the technological barriers.

Alternative cements are difficult to establish in the highly conservative building sector and many have yet to prove they are able to fully replace OPC.

Another large-scale CO₂ abatement measure is post-production carbon capture and storage (CCS). Carbon capture technologies such as amine-based CO₂ scrubber, membrane-based gas separation, calcium looping, oxyfuel kiln lines or indirect calcination of the calcium carbonate are needed for the CCS to work efficiently. However, in some cases even the gas produced in the above described technologies has a too low CO₂ concentration for storage.

Requirements for CO₂ to be transported are typically > 95% CO₂-concentration and, if any, low amounts of H₂O, O₂ and N₂. Each transportation line and storage site does have its own detailed specifications. For details see e.g. Energy Procedia 63 (2014) 2764 - 2778.

One proposal to limit carbon dioxide emission is to utilize the carbon dioxide containing gas for processes and/or for making products that need CO₂ as input material. For example, the CO₂ captured from the cement industry could be used for the food industry. But here again, the CO₂ concentration is mostly too low and/or the gas contains other components not tolerable for use with food. Other possible uses of carbon dioxide containing gas, also from power plants, by converting them into useful products are found e.g. in US 8,114,367 B2,
US 2006/0185560 A1, US 8,367,025 B2, US 2013/0112115 A1, EP 2 511 003 A1. A replacement of cement by materials that absorb carbon dioxide for hardening is especially promising since cement production is still associated with high carbon dioxide emission in spite of all concepts to restrict them.

There are numerous proposals for very varying approaches to reduce CO₂ emissions, save energy and natural resources, both cement clinker raw materials as well as aggregate, by recycling concrete demolition waste for making fresh concrete. Some recent ones are WO 2015/154174 A1, WO 2019/115722 A1, not prior published EP19177076.7 and EP19204165.5, as well as the prior art cited in those documents. But each of those approaches has its problems, like high costs for separation of fine and coarse waste, either lower efficiency of carbon dioxide absorption in dry processes or high energy demand for the more effective wet process and so on.

Thus, there is still a need to find effective ways for saving CO₂ emissions, energy and natural resources as well as sequestering carbon dioxide.

The present invention surprisingly solves this problem by providing a general concept for utilization of carbon dioxide with provision of useful products that is easily adapted to specific circumstances based on general knowledge.

Thus, the above mentioned problem is solved by a method of utilizing carbon dioxide containing gas arising as waste or by-product in one or more of the following industrial processes:
- cement clinker production such as in rotary kilns and/or calciner stages, oxyfuel kiln lines, or from separate calcination devices or indirect calcination of the calcium carbonate,
- carbon capture technologies, such as amine-based CO₂ scrubber and membrane-based gas separation,
   for providing a useful carbonation product by one or more of the following production steps:
- carbonation of concrete demolition waste, especially recycled concrete fines, for the production of SCM or calcite and active silica,
- carbonation of alkaline industrial materials, e.g. fly ashes, slags and other, for the production of SCM or calcite and active silica,
- carbonation of natural materials, e.g. olivine, serpentine, talc, MgO-containing minerals, and other, for the production of SCM or calcite and active silica, and
- carbonation hardening of binders,
   wherein the production step is selected based on the amount of carbon dioxide in the carbon dioxide containing gas, the additional substances present in the carbon dioxide containing gas and temperature and pressure of the carbon dioxide containing gas.

For all the production steps unpurified CO₂ gas is suitable, since they work with CO₂ concentrations from as low as about 1 % by volume and up to more than 99 % by volume and may be conducted at variable CO₂ concentrations. Besides, during many of these processes the gas is also cleaned from other substances like SOₓ.

The carbon dioxide containing gas is for example, but not limited to, a gas from a cement clinker production line, such as exhaust gas from rotary kilns and/or calciner stages, oxyfuel kiln lines, or from separate calcination devices or indirect calcination of the calcium carbonate, or a gas from carbon capture technologies, such as amine-based CO₂ scrubber and membrane-based gas separation, or CO₂-rich flue gas from electrically heated kiln lines, where the electrical heating can be either at the calciner or the main burner, or even both.

On the one hand, the method according to the invention allows the transformation of natural and industrial waste materials into mainly calcite with or without magnesium-containing carbonated phases (other forms of calcium and/or magnesium carbonate are possible) and reactive amorphous silica and alumina gels that are potentially hydrated. The latter two components have a high pozzolanic and/or latent-hydraulic reactivity and allow to make use of the synergies between calcium (including optional magnesium) carbonate and silica and alumina rich cementitious material when reacting in the cementitious matrix. In the case of carbonation hardening, the CO₂ accelerates the production in precast concrete plants. On the other hand, the method avoids the need for purification of the gases produced during cement clinker production (oxyfuel kiln lines or indirect calcination of the calcium carbonate) or during scrubbing of CO₂ from the cement kiln (such as amine-based CO₂ scrubber, membrane-based gas separation or calcium-looping technologies).

The main advantages of the method according to the invention are:
- significant sequestration potential of CO₂, e.g. CO₂ sequestration from cement plant stack,
- valorisation of waste or unsuitable natural materials into SCM, i.e. added value products,
- saving efforts (materials, energy and thus costs) for purifying CO₂ gas, and
- acceleration of the production in precast concrete plants.

So as to simplify the description the following abbreviations that are usual in the field of cement are used herein: H - H₂O, C - CaO, A - Al₂O₃, F - Fe₂O₃, M - MgO, S - SiO₂ and $ - SO₃. Compounds are mostly named by the pure form, without explicit mentioning of solid solutions, foreign ion substitution and impurities etc. as are usual in technical and industrial materials. As the man skilled in the art knows, the exact composition of the phases described may vary due to substitution with foreign ions. Such compounds are comprised when mentioning the pure form herein unless it is expressly stated otherwise.

The term "reactive" shall mean a hydraulic reactivity unless specified otherwise. Hydraulic reactivity designates the reaction of a compound with water or other water containing compounds to form hydrated phases including a reaction of two or more compounds occurring simultaneously.

Herein, clinker designates a sinter product obtained by burning a raw material at elevated temperature and containing at least one hydraulic phase. Burning means a change of one or more property of the starting material such as chemistry, crystallinity, phase composition, spatial arrangement and bonds of lattice atoms which is brought about by a supply of thermal energy. The starting material may be a single material, but usually it is a mixture. The starting material is typically finely ground and then designated as raw meal. The starting material may contain mineralizers, which are substances decreasing the temperature necessary for melting and/or act as fluxes and/or enhance clinker formation e.g. by forming solid solutions or stabilisation of phases. Mineralizers can be part of the starting material components or be added as separate component.

Cement is used to designate a material that, after mixing with water to form a paste, is able to develop mechanical strength by hydraulic reaction. Thus, cement denotes a clinker ground with or without further components, and other mixtures like super sulphated cement, geopolymer binder, and dicalcium silicate cement obtained by hydrothermal treatment. Binder or binder mixture means a material or mixture containing cement and developing mechanical strength by a hydraulic reaction with water or otherwise like by carbonation, wherein the binder typically but not necessarily contains more components than the cement. A binder is used adding water or another liquid and mostly also aggregate as well as optionally admixtures and/or additives.

A supplementary cementitious material (SCM) is defined as a pozzolanic and/or latent hydraulic material useful to replace a part of the clinker in a binder. Latent hydraulic materials have a composition that allows hydraulic reaction upon contact with water, wherein typically an activator is needed to enable hardening within technically feasible times. Activator means a substance that accelerates the hardening of latent hydraulic materials. It can be an addition like sulfate or calcium (hydr)oxide and/or products of the hydraulic reaction of the ground clinker, e.g. calcium silicates liberate calcium hydroxide during hardening. Pozzolanic materials are characterized by a content of reactive silica and/or alumina which form strength providing calcium silicate hydrates and calcium aluminate hydrates, respectively, during hydration of the clinker together with the calcium hydroxides liberated. In practice the limit between latent hydraulic and pozzolanic materials is not well defined, for example fly ashes can be both latent hydraulic and pozzolanic depending on their calcium oxide content. Consequently, the term SCM designates both latent hydraulic as well as pozzolanic materials. However, not reactive or only slightly reactive materials like limestone that substantially do not take part in the hydraulic reaction have to be clearly differentiated from SCM, with which they are sometimes summarized as mineral additions.

Carbon dioxide containing gas is defined as any gas arising as by-product or waste in an industrial process, like electricity generation in a coal fired power plant or cement manufacturing or exhaust gas cleaning. First and foremost, exhaust gases, before or after separating from other components present in the emitted gas, are carbon dioxide containing gases utilized according to the present invention.

One typical carbon dioxide containing gas is the exhaust gas arising from a rotary kiln and/or calciner for manufacturing ordinary portland cement (OPC). OPC clinker is made by calcining and sintering a calcium carbonate containing raw material. Calcination takes place either in the rotary kiln or in the preheater. It requires a considerable amount of the total energy for the process and also produces carbon dioxide as by-product. In the most common plants the by-product CO₂ is mixed with the fuel burning exhaust gas. Hence, a part of the CO₂ in the gas originates from fossil limestone decomposition, a part from fossil fuels such as e.g. gas, coal, pet coke, a part from biomass or renewable fuels and a part from wastes and by-products as a result of the co-processing. Such carbon dioxide containing gas has a concentration from 10 to 30% by volume, comprises various other substances like NOₓ, SOₓ, water (vapour) and dust. In a typical plant it will be utilized in drying raw materials and be cleaned from dust in a filter and from SOₓ in a scrubber, mostly also from NOₓ in a catalytic or non-catalytic reduction with ammonia (SCR or SNCR), before being vented through the stack. According to the invention the carbon dioxide containing gas can be either the gas normally vented via the stack, preferably the gas having been used to dry raw materials is used, preferably after SCR or SNCR and depending on the production step either before or after the filter or scrubber.

A further typical carbon dioxide containing gas is the exhaust gas from coal or gas fired power plants. Here the CO₂ concentration in the gas is very variable, ranging usually from 4 to 20 % by volume. Depending mainly on the fuel large amounts of SOₓ can be present, further water, dust and NOₓ are normally present. The gas can be used either as is or after the usual cleaning with filters and/or scrubbing.

Another carbon containing gas is exhaust gas from waste incineration, such as municipal waste incineration. Such carbon dioxide containing gas has a concentration from 5 to 20 % by volume, and comprises various other substances like NOx, SOx, water and dust. Often heavy metals and/or organic compounds are contained. This gas can also be used as is, but preferably it is used after the usual cleaning, especially when heavy metals and/or organic compounds are contained.

Yet another typical carbon dioxide containing gas is the exhaust gas from a separate calcination of calcium carbonate as cement raw material. Such gas contains more carbon dioxide, often at least 50 % by volume, and frequently more than 90 % by volume up to more or less pure CO₂. There are several possible approaches for a separate calcination. The impact and requirements on the cement plant are restricted to the calcination and preheater stage. In the not prior published EP19175135.3 a calcination by microwave is proposed. The Leilac project of the EU, see https://9ae48deb-dd3f-4936-9a9f-ed25155caed5. filesusr.com/ugd/ce8a5c_c050d8aca91e4e1d9ba199734e48a720.pdf and other publications on https://www.project-leilac.eu/publications, foresees an indirect calcination with normal fuels inside a double walled reactor. This LEILAC-technology can also be operated with (renewable) electricity as a heat source, minimizing further the CO₂-emission.

Still another carbon dioxide containing gas is the exhaust gas from a cement kiln and/or calciner operated in the oxyfuel mode. Here the CO₂ concentration is from 50 to 98 % by volume. For oxyfuel mode there are presently known a 1^{st} generation Oxyfuel where the flue-gas is recycled to the clinker cooler and/or calciner oxygen inlet and a 2^{nd} generation Oxyfuel where pure oxygen is running through the clinker cooler to reach the main burner and/or fed to the calciner, and no recirculation of the flue-gas is applied.

Combining Leilac with a small oxyfuel burner at its outlet where the calcined material leaves is envisaged to result in higher throughput of the reactor and/or higher calcination degree. This results in higher CO₂ concentration in the exhaust gas and overall improved performance and economics.

Another carbon dioxide containing gas is the exhaust gas from a cement kiln and/or calciner operated with electrical energy either in the calciner or in the main burner or in both. The electrical energy can be applied by means of plasma-burners, heating elements, electrical burner and micro-wave, see e.g.
https://group.vattenfall.com/press-and-media/news-press-releases/pressreleases/ 2019/vattenfall-and-cementa-take-the-next-step-towards-a-climate-neutral-cement.

Still another carbon dioxide containing gas results from calcium oxide and magnesium oxide production, e.g. lime and/or periclase production. Here the same methods for carbon capture and concentration/purification can be applied as those used for cement.

Other industrial activities which produce large amounts of carbon dioxide are ammonia production and hydrogen production from natural gas or other hydrocarbon raw materials.

Steel and iron production is also a large CO₂ emitter and hence the gases produced there are suitable for the method according to the present invention as well.

Last but not least, carbon dioxide containing gas is obtained from amine scrubbers and membrane filters for example in coal, oil, gas or biomass fired power plants, waste incinerators, bio-mass and bio-gas fuelled district heating plants, cogeneration units for heat and electricity and similar plants, as well as manufacturing processes such as cement manufacturing, steel making and others.

It is apparent that the properties of these carbon dioxide containing gases, both with respect to chemical composition and as regards physical conditions like temperature and pressure, are quite variable. Except for the rather pure and concentrated carbon dioxide from separate calcination it would require big efforts to clean the gas from pollutants such as but not limited to NOₓ, SOₓ, organic compounds, and heavy metals and/or to concentrate it enough for the known storage technologies and many of the known utilization methods. Thus, the method according to the invention of selecting a production step in which the respective concentration, composition and conditions of a given carbon dioxide containing gas is acceptable constitutes a major breakthrough towards utilization of such gases. The production steps are described in detail in the following.

In one embodiment, the production step is a carbonation of concrete demolition waste, especially recycled concrete fines, for the production of SCM or calcite and active silica. Such methods are described e.g. in EP 3 498 681 A1, EP18176964.7, EP19179579.8, EP19177076.7 and EP19204165.5, all of which are incorporated herein by reference in their entirety. Thereby, reactive SCM is obtained, eventually combined with useful aggregate, for use in construction. A major advantage of this production step is the concurrent beneficial use of concrete demolition waste. Several specific methods to practice this production step are described in the following.

One preferred method is a wet carbonation of recycled concrete fines in a wet scrubber. As described in: https://en.wikipedia.org/wiki/Wet_scrubber the term wet scrubber describes a variety of devices that remove pollutants from a furnace flue gas or from other gas streams. In a wet scrubber, the polluted gas stream is brought into contact with the scrubbing liquid, i.e. a solution or suspension, by spraying it with the liquid, by forcing it through a pool of liquid, or by some other contact method, so as to remove the pollutants. Wet scrubbers remove dust particles by capturing them in liquid droplets. The droplets are then collected, the liquid dissolving or absorbing the pollutant gases. Any droplets or reacting liquid that are in the scrubber inlet gas must be separated from the outlet gas stream by means of another device referred to as a mist eliminator or entrainment separator (these terms are interchangeable). Also, the resultant scrubbing liquid must be treated prior to any ultimate discharge or being reused in the plant. Wet scrubbers that remove gaseous pollutants are referred to as absorbers. Good gas-to-liquid contact is essential to obtain high removal efficiencies in absorbers. Various wet scrubber designs are used to remove gaseous pollutants, with the packed tower and the plate tower being the most common. If the gas stream contains both particulate matter and gases, wet scrubbers are generally the only single air pollution control device that can remove both pollutants. Wet scrubbers can achieve high removal efficiencies for either particles or gases and, in some instances, can achieve a high removal efficiency for both pollutants in the same system. However, in many cases, the best operating conditions for particles collection are the poorest for gas removal. In general, obtaining high simultaneous gas and particulate removal efficiencies requires that one of them be easily collected (i.e., that the gases are very soluble in the liquid or that the particles are large and readily captured), or by the use of a scrubbing reagent, usually lime or sodium hydroxide, but according to the invention recycled concrete fines or any other material that is to be carbonated. In the production step suitable for the present invention the input gas composition is typically CO₂ concentration 10 - 100 %, temperature 40 - 350 °C. Conditions are adjusted such that the output gas has 20 - 99 °C, CO₂ concentration 0 - 90 %. Pressure is preferably atmospheric.

Another method uses a so-called semi-dry scrubber as production step. Therein waste material rich in carbonatable Ca and/or Mg phases, e.g. recycled concrete fines, and with d₉₀ ≤ 1000 µm and a Rosin-Rammler slope n from 0.6 to 1.4 is provided, injected into an exhaust gas stream containing CO₂ for reaction with the CO₂ at a relative humidity of 50 to 100 Vol.-% and a temperature from 40 to 130 °C in an amount of dry waste material ranging from 5 to 30 kg/m³, a partly carbonated waste material and purified exhaust gas are withdrawn, and a part of the partly carbonated waste material is recycled into the exhaust gas while the remainder is discharged. Further details are described in EP19179579.8, the disclosure of which is herewith incorporated herein in its entirety.

Another method for this production step uses a so-called dry scrubber as described in https://www.sciencedirect.com/topics/engineering/dry-scrubber. Specifically according to https://en.wikipedia.org/wiki/Scrubber a dry or semi-dry scrubbing system, unlike the wet scrubber, does not saturate the flue gas stream that is being treated with moisture. In some cases no moisture is added, while in others only the amount of moisture that can be evaporated in the flue gas without condensing is added. Therefore, dry scrubbers generally do not have a stack steam plume or wastewater handling/disposal requirements. There are a number of dry type scrubbing system designs. However, all consist of two main sections or devices: a device to introduce the acid gas sorbent material, here the material to be carbonated, into the gas stream and a particulate matter control device to remove reaction products, excess sorbent material as well as any particulate matter already in the flue gas.

Still another method for this production step uses a combination of grinding the material and carbonation, wherein for manufacturing supplementary cementitious material and sequestering CO₂ by carbonating concrete fines the method comprises the steps: grinding the concrete fines obtained from crushed concrete demolition waste in a mill at a temperature from 1 to 10 °C above the water dew point in a carbonating atmosphere provided by a gas containing from 10 to 99 Vol.-% CO₂, circulating the ground and partially carbonated concrete fines in a fluidized bed reactor in contact with the carbonating atmosphere, and withdrawing decarbonated gas and carbonated concrete fines. Further details are found in EP19177076.7, the disclosure of which is herewith incorporated herein in its entirety.

In another embodiment, the production step is a carbonation and/or mineralization of industrial materials, especially alkaline wastes from different industries, e.g. but not limited to fly ashes, bottom ashes, slags, especially from iron and steel production, and others, for the production of SCM or calcite (with or without a content of magnesium carbonate) and active silica and/or alumina. Like for use of concrete demolition waste, there are already proposals for utilization of such materials. However, in many cases their quality is insufficient and known methods of enhancing the quality involve using energy, sometimes considerable amounts of energy, and/or other valuable resources. Carbonation according to the present invention surprisingly enables valorisation of such low quality materials with minimal energy input, if at all, and requires no further valuable raw material resources. Several methods useful for this production step are described in the following.

One preferred method uses wet carbonation of the industrial materials in a wet scrubber as described before for recycled concrete fines.

Another one uses a so-called semi-dry scrubber as described before.

Another one uses a so-called dry scrubber as described before.

Another one uses a combination of grinding the material and carbonation as described before.

Another one uses autoclaves for the carbonation. The range of possible conditions is described e.g. in Sanna et al., "A review of mineral carbonation technologies to sequester CO2", Chemical Society Reviews, 2014, the content of which is herewith incorporated herein in its entirety. Accordingly, high pressure (40-150 bar) can be used to enhance both the dissolution of CO₂ in the water media and the diffusion of the gas into the solid matrix. CO₂ pressure and the stirring rate (1500 rpm) can significantly influence the reaction rate in direct aqueous carbonation at the optimum temperature range (150 - 200 °C). Operating above those values, carbonation was considered independent of the stirring rate and CO₂ pressure. The carbonation of e.g. wollastonite at constant temperature (150 °C) remains constant between 10 and 40 bar and decreases at CO₂ pressure below 10 bar due to deficiency of (bi)carbonate activity. On the other hand, the wollastonite carbonation increases when the CO₂ pressure is increased from 20 to 40 bar at 200 - 225 °C, due to deficiency of (bi)carbonate activity. The control mechanisms of carbonation of pure CO₂ and flue gas carbonation are expected to be similar, but the reaction rate of diluted CO₂ is slower because its dissolution rate is slower compared to that of pure CO₂. The liquid/solid (L/S) ratio is an important parameter because carbonation requires specific L/S ratios to be efficient. L/S-ratios lower than 2 cannot be stirred sufficiently in an autoclave reactor and may result in poor CO₂ gas-liquid and solid-liquid mass transfer rates. Therefore, the lowest liquid-to-solid ratio in an autoclave reactor is 2 kg/kg, although the majority of aqueous carbonation experiments are carried out at a higher L/S-ratio to enhance the conversion efficiency. Also, the reduction of the L/S-ratio leads to a substantial improvement of the heat balance of the process and, thus, the overall CO₂ sequestration efficiency. However, if the L/S-ratio becomes too low, pumping and stirring problems might arise because of an increased viscosity, which would lead to a significant decrease of the conversion. Theoretically, an industrial process might be operated to 1:1 L/S ratios improving the overall CO₂ sequestration efficiency of the process.

A third embodiment of the production step is a carbonation of natural materials, e.g. olivine, serpentine, talc, MgO-containing minerals, clay, and others, for the production of SCM or of periclase, MgO minerals and/or dolomite and/or calcite and active silica. Here again the prior art contains numerous suggestions of how to utilize these materials, but as with the industrial products known methods of utilization, e.g. by enhancing the quality, involve using energy, sometimes considerable amounts of energy, and/or other valuable resources. Thus, again carbonation according to the present invention surprisingly enables valorisation of such low quality materials with minimal energy input, if at all, and requires no further valuable raw material resources. Suitable methods to practice this production step are described in the following.

One preferred method uses a wet carbonation in a wet scrubber as described before.

Another one uses a so-called semi-dry scrubber as described before.

Another one uses a so-called dry scrubber as described before.

Another one uses a combination of grinding of the material and carbonation as described before.

Another one uses autoclaves for the carbonation as described before.

In a fourth embodiment of the production step is a carbonation hardening of binders. A multitude of binders have been developed for carbonation hardening either instead of or in addition to the hydraulic hardening of the binder. Examples are found for example in EP 3 466 900 A1, WO 2019/072640 A1, and the prior art cited therein. EP 3 466 900 A1 and WO 2019/072640 A1 are herewith incorporated herein by reference in their entirety. Conditions for practising this production step are found in these publications.

The method according to the invention requires a selection of the production step suitable for a given carbon dioxide containing gas so that input of energy and/or valuable resources as well as additional device requirements are avoided as far as possible. Also transportation is an issue, since it is associated with energy demand and the up to now unavoidable CO₂ emission of that, too. As far as transport is needed, it should be efficient, e.g. a transport of rather pure carbon dioxide containing gas is usually preferable over a transport of concrete demolition waste. Advantageous combinations of carbon dioxide source and production steps are described in the following, however, other combinations may be beneficial for certain specific carbon dioxide sources and those are all covered by the present invention.

One specifically advantageous combination of carbon dioxide containing gas source and production step is using CO₂ from Portland cement kiln lines for carbonation of recycled concrete fines (recycled cement paste). This is particularly favourable for carbonation installations that are located in proximity of the cement plant, since concentration and transport of CO₂ gas may be avoided. However, the recycled concrete or the components of recycled concrete need to be transported to the carbonation location. For this carbonation technology CO₂ concentration in the gas can be in the range of 1 to 30 Vol.-% while the temperature is typically in the range of 20 to 300 °C. The carbonation of the recycled cement paste can be performed in wet scrubbers, semi-dry scrubbers or dry scrubbers. Additionally, for such applications the combination of carbonation and grinding is a preferred technology. Depending on the carbonation technology the exhaust gas from the cement kiln may need to be dried or cooled down. Another advantage of this application is the possibility to limit investment for the gas cleaning, that is done currently with the help of the bag or electrostatic filters. In the listed above carbonation devices not only CO₂ can be removed but as well other pollutants including gases and solid material.

Another preferred combination is use of the carbon dioxide containing gas from the cement clinker production line for the carbonation of Ca- and Mg-containing waste materials, for example but not exclusively fly ashes and slags from industrial sources/processes. This is particularly favourable for carbonation installations that are located in proximity of the cement plant, since concentration and transport of CO₂ gas can be avoided. However, the waste materials need to be transported to the carbonation location. For this carbonation technology CO₂ concentration in the gas can be in the range of 1 to 30 Vol.-% while temperature can be in the range of 20 to 300 °C. Depending on the carbonation technology the exhaust gas from the cement kiln may need to be dried or cooled down.

The carbonation of the waste materials can be performed in wet scrubbers, semi-dry scrubbers or dry scrubbers. Additionally, for such applications a combination of carbonation and grinding is a preferred technology.

Furthermore, the application of the autoclave technology is favourable here since some of the components of the fly ashes and slags are difficult to carbonate. An additional advantage of the autoclave technology is that the heat of the exhaust gases and the water contained in the gas can be used during the autoclaving.

One specifically advantageous combination is use of the carbon dioxide containing gas from the cement kiln production line for the carbonation of natural materials containing Ca and Mg, for example, but not excluding other materials, olivine, serpentine, talc, MgO-containing minerals. This is particularly favourable for carbonation installations that are located in proximity of the cement plant since concentration and transport of CO₂ gas can be avoided. However, the natural materials need to be transported to the carbonation location. For this carbonation technology CO₂ concentration in the gas can be in the range of 1 to 30 Vol.-% while temperature can be in the range of 20 to 300 °C. The carbonation of the natural materials can be performed in wet scrubbers, semi-dry scrubbers or dry scrubbers. Additionally, for such applications the combination of carbonation and grinding is a preferred technology. Depending on the carbonation technology the exhaust gas from the cement kiln may need to be dried or cooled down. However, because the natural materials are difficult to carbonate and require high temperatures and pressures, the application of the autoclave technology is favourable here. An advantage of the autoclave technology is that the heat of the exhaust gases and the water contained in the gas can be used during the autoclaving.

Another preferred combination is use of carbon dioxide containing gas from the cement kiln production line in for carbonation hardening of binders. It is particularly favourable to equip precast concrete plants with the carbonation installation that are located in proximity of the cement plant since the concentration and transport of CO₂ gas can be avoided. For this carbonation technology CO₂ concentration in the gas can be in the range of 1 to 30 Vol.-% while temperature can be in the range of 20 to 300 °C. For this application the exhaust gases may need to be further treated to achieve a suitable carbonation temperature and the required relative humidity in the carbonation chamber.

One specifically advantageous combination of carbon dioxide containing gas source and production step is using CO₂ from oxyfuel Portland cement kiln for carbonation of recycled concrete fines (recycled cement paste). This combination is favourable for carbonation installation that are located in proximity of the cement plant since the concentration and transport of CO₂ gas can be avoided. However, the high concentration of the CO₂ in these exhaust gases also enables the transportation of the CO₂ and installation of the carbonation units remote from the cement plant. For this carbonation technology the CO₂ concentration in the gas can be in the range of 50 to 98 Vol.-% while temperature can be in the range of 20 to 300 °C. The carbonation of the recycled cement paste can be performed in wet scrubbers, semi-dry scrubbers or dry scrubbers. Depending on the required reaction conditions, the gas containing CO₂ may require drying and/or heating or cooling, or even dilution of the CO₂ concentration. Additionally, for such applications, the combination of carbonation and grinding is a preferred technology. Another advantage of this application is the possibility to limit investment for the gas cleaning, that is done currently with the help of the bag or electrostatic filters. In the above listed carbonation devices not only CO₂ can be removed but as well other pollutants including gases and solid material.

Another preferred combination is use of the carbon dioxide containing gas from the oxyfuel cement kiln production line for carbonation of Ca-and Mg-containing waste material, for example but not exclusively fly ashes or slags from different industrial sources. This combination is favourable for carbonation installations that are located in proximity of the cement plant since the concentration and transport of CO₂ gas can be avoided. However, the high concentration of the CO₂ in these exhaust gases also enables the transportation of the CO₂ and installation of the carbonation units remote from the cement plant. For this carbonation technology the CO₂ concentration in the gas can be in the range of 50 to 98 Vol.-% while temperature can be in the range of 20 to 300 °C. The carbonation of the waste materials can be performed in wet scrubbers, semi-dry scrubbers or dry scrubbers. Additionally, for such applications the combination of carbonation and grinding is a preferred technology. Depending on the carbonation technology, the exhaust gas from the oxyfuel cement kiln may need to be dried or cooled down. Furthermore, the application of the autoclave technology is favourable here since some of the components of the fly ashes and slags are difficult to carbonate. An additional advantage of the autoclave technology is that the heat of the exhaust gases and the water in the gas can be used during the autoclaving.

One specifically advantageous combination is use of the carbon dioxide containing gas from the oxyfuel cement kiln production line for the carbonation of natural materials containing Ca and Mg, for example, but not excluding other materials, olivine, serpentine, talc, MgO-containing minerals. This combination is favourable for the carbonation installations that are located in proximity of the cement plant since the concentration and transport of CO₂ gas can be avoided. However, the high concentration of the CO₂ in these exhaust gases also enables the transportation of the CO₂ and installation of the carbonation units remote from the cement plant. For this carbonation technology the CO₂ concentration in the gas can be in the range of 50 to 98 Vol.-% while temperature can be in the range of 20 to 300 °C. The carbonation of the natural materials can be performed in wet scrubbers, semi-dry scrubbers or dry scrubbers. Additionally, for such applications, the combination of carbonation and grinding is a preferred technology. Depending on the carbonation technology the exhaust gas from the oxyfuel cement kiln may need to be dried or cooled down. However, because the natural materials are difficult to carbonate and require high temperatures and pressures, the application of the autoclave technology is favourable here. An advantage of the autoclave technology is that the heat of the exhaust gases and the water in the gas can be used during the autoclaving.

Another preferred combination is use of the carbon dioxide containing gas from the oxyfuel cement kiln production line for carbonation hardening of binders. This combination is favourable for precast concrete plants equipped with carbonation installations that are located in proximity of the cement plant, since the concentration and transport of CO₂ gas can be avoided. However, the high concentration of the CO₂ in these exhaust gases also enables the transportation of the CO₂ and installation of the carbonation units remote from the cement plant. For this carbonation technology the CO₂ concentration in the gas can be in the range of 50 to 98 Vol.-% while the temperature can be in the range of 20 to 300 °C. For this application the exhaust gases may need to be further treated to achieve a suitable carbonation temperature, CO₂ concentration and requited relative humidity in the carbonation chamber. Furthermore, the installation of storage capacities for CO₂ gas needs to be considered to account for the batch production of the concrete elements, if needed.

One specifically advantageous combination of carbon dioxide containing gas source and production step is using CO₂ from CaO and/or MgO production for carbonation of recycled concrete fines (recycled cement paste). This combination is favourable for the carbonation installations that are located in proximity of the CaO and/or MgO production plant since the concentration and transport of CO₂ gas can be avoided. Also carbonation in remote locations is feasible, since the high concentration of the CO₂ in these exhaust gases enables the transportation of the CO₂. For this carbonation technology the CO₂ concentration in the gas can be in the range of 50 to 98 Vol.-% while temperature can be in the range of 20 to 300 °C. The carbonation of the recycled cement paste can be performed in wet scrubbers, semi-dry scrubbers or dry scrubbers. Depending on the required reaction conditions, the gas containing CO₂ may require drying and/or heating or cooling, or even dilution of the CO₂ concentration. Additionally, for such applications, the combination of carbonation and grinding is a preferred technology. Another advantage of this application is the possibility to limit investment for the gas cleaning, that is done currently with the help of the bag or electrostatic filters. In the above listed carbonation devices not only CO₂ can be removed but as well other pollutants including gases and solid material.

Another preferred combination is use of the carbon dioxide containing gas from CaO and/or MgO production with the carbonation of the Ca-and Mg-containing waste materials, for example, but not excluding other materials, fly ashes or slags from different industrial sources. This combination is favourable for carbonation installations that are located in proximity of the CaO and/or MgO production plant, since the concentration and transport of CO₂ gas can be avoided. However, the high concentration of the CO₂ in these exhaust gases also enables the transportation of the CO₂ and installation of the carbonation units remote from the production plant. For this carbonation technology the CO₂ concentration in the gas can be in the range of 50 to 98 Vol.-% while temperature can be in the range of 20 to 300 °C. The carbonation of the waste materials can be performed in wet scrubbers, semi-dry scrubbers or dry scrubbers. Additionally, for such applications, the combination of carbonation and grinding is a preferred technology. Depending on the carbonation technology, the exhaust gas from the CaO and/or MgO production plant may need to be dried or cooled down. Furthermore, the application of the autoclave technology is favourable here, since some of the components of the fly ashes and slags are difficult to carbonate. An additional advantage of the autoclave technology is that the heat of the exhaust gases and the water in the gas can be used during the autoclaving.

One specifically advantageous combination is use of the carbon dioxide containing gas from CaO and/or MgO production for the carbonation of natural materials containing Ca and Mg, for example, but not excluding other materials, olivine, serpentine, talc, MgO-containing minerals. This combination is favourable for carbonation installations that are located in proximity of the production plant, since the concentration and transport of CO₂ gas can be avoided. However, the high concentration of the CO₂ in these exhaust gases also enables the transportation of the CO₂ and installation of the carbonation units remote from the production plant. For this carbonation technology the CO₂ concentration in the gas can be in the range of 50 to 98 Vol.-% while temperature can be in the range of 20 to 300 °C. The carbonation of the natural materials can be performed in wet scrubbers, semi-dry scrubbers or dry scrubbers. Additionally, for such applications, the combination of carbonation and grinding is a preferred technology. Depending on the carbonation technology the exhaust gas from the CaO and/or MgO production may need to be dried or cooled down. Because the natural materials are difficult to carbonate and require high temperatures and pressures, the application of the autoclave technology is favourable here. An advantage of the autoclave technology is that the heat of the exhaust gases and the water in the gas can be used during the autoclaving.

Another preferred combination is use of the carbon dioxide containing gas from CaO and/or MgO production for carbonation hardening. This combination is favourable for precast concrete plants equipped with carbonation installations that are located in proximity of the CaO and/or MgO production plant, since the concentration and transport of CO₂ gas can be avoided. However, the high concentration of the CO₂ in these exhaust gases also enables the transportation of the CO₂ and installation of the carbonation units remote from the CaO and/or MgO production plant. For this carbonation technology the CO₂ concentration in the gas can be in the range of 50 to 98 Vol.-% while temperature can be in the range of 20 to 300 °C. For this application the exhaust gases may need to be further treated to achieve a suitable carbonation temperature, CO₂ concentration and requited relative humidity in the carbonation chamber. Furthermore, the installation of storage capacities for CO₂ gas needs to be considered to account for the batch production of the concrete elements, if needed.

One specifically advantageous combination of carbon dioxide containing gas source and production step is using CO₂ from a separate calcination, especially from a Leilac reactor, attached to the cement, CaO and/or MgO production line for carbonation of recycled concrete fines (recycled cement paste). This combination is favourable for both, carbonation installations that are located in proximity of the production plant, since the concentration and transport of CO₂ gas can be avoided, and for carbonation in remote locations, since the high concentration of the CO₂ in these exhaust gases enables the transportation of the CO₂. For this carbonation technology the CO₂ concentration in the gas can be in the range of 50 to 98 Vol.-% while temperature can be in the range of 20 to 300 °C. The carbonation of the recycled cement paste can be performed in wet scrubbers, semi-dry scrubbers or dry scrubbers. Depending on the required reaction conditions, the gas containing CO₂ may require drying and/or heating or cooling, or even dilution of the CO₂ concentration. Additionally, for such applications, the combination of carbonation and grinding is a preferred technology. Another advantage of this application is the possibility to limit investment for the gas cleaning, that is done currently with the help of the bag or electrostatic filters. In the listed above carbonation devices not only CO₂ can be removed but as well other pollutants including gasses and solid material.

Another preferred combination is use of the carbon dioxide containing gas from the separate calcination, especially from the Leilac reactor attached to the cement, CaO and/or MgO production lines with the carbonation of the Ca-and Mg-containing waste material, for example, but not exclusively, fly ashes or slags from different industrial sources. This combination is favourable for the carbonation installations that are located in proximity of the cement, CaO and/or MgO plant since the concentration and transport of CO₂ gas can be avoided. However, the high concentration of the CO₂ in these exhaust gases also enables the transportation of the CO₂ and installation of the carbonation units remote from the cement, CaO and/or MgO plant. For this carbonation technology the CO₂ concentration in the gas can be in the range of 50 to 98 Vol.-% while temperature can be in the range of 20 to 300 °C. The carbonation of the waste materials can be performed in wet scrubbers, semi-dry scrubbers or dry scrubbers. Additionally, for such applications the combination of carbonation and grinding is a preferred technology. Depending on the carbonation technology, the exhaust gas may need to be dried or cooled down. Furthermore, the application of the autoclave technology is favourable here, since some of the components of the fly ashes and slags are difficult to carbonate. An additional advantage of the autoclave technology is that the heat of the exhaust gases and the water in the gas can be used during the autoclaving.

One specifically advantageous combination is use of the carbon dioxide containing gas from the separate calcination, especially from the Leilac reactor attached to the cement, CaO and/or MgO production line for the carbonation of natural materials containing Ca and Mg, for example, but not excluding other materials, olivine, serpentine, talc, MgO-containing minerals. This combination is favourable for carbonation installations that are located in proximity of the cement, CaO and/or MgO plant since the concentration and transport of CO₂ gas can be avoided. However, the high concentration of the CO₂ on these exhaust gases also enables the transportation of the CO₂ and installation of the carbonation units remote from the cement, CaO and/or MgO plant. For this carbonation technology the CO₂ concentration in the gas can be in the range of 50 to 98 Vol.-% while temperature can be in the range of 20 to 300 °C. The carbonation of the natural materials can be performed in wet scrubbers, semi-dry scrubbers or dry scrubbers. Additionally, for such applications, the combination of carbonation and grinding is a preferred technology. Depending on the carbonation technology the exhaust gas from the Leilac reactor attached to the cement, CaO and/or MgO production line may need to be dried or cooled down. However, because the natural materials are difficult to carbonate and require high temperatures and pressures, the application of the autoclave technology is favourable here. An advantage of the autoclave technology is that the heat of the exhaust gases and the water in the gas can be used during the autoclaving.

Another preferred combination is use of the carbon dioxide containing gas from the separate calcination, especially from the Leilac reactor attached to the cement, CaO and/or MgO production line for carbonation hardening. This combination is favourable for precast concrete plants equipped with carbonation installations that are located in proximity of the cement, CaO and/or MgO plant since the concentration and transport of CO₂ gas can be avoided. However, the high concentration of the CO₂ in these exhaust gases also enables the transportation of the CO₂ and installation of the carbonation units remote from the cement, CaO and/or MgO plant. For this carbonation technology the CO₂ concentration in the gas can be in the range of 50 to 98 Vol.-% while the temperature can be in the range of 20 to 300 °C. For this application the exhaust gases may need to be further treated to achieve a suitable carbonation temperature, CO₂ concentration and the requited relative humidity in the carbonation chamber. Furthermore, the installation of the storage capacities for CO₂ gas needs to be considered to account for the batch production of the concrete elements, if needed. Alternatively, the separate calcination, e.g. the Leilac reactor, can be operated in batch mode to match the production cycles of carbonation hardening and/or to adapt to production of electricity from renewable sources.

One specifically advantageous combination of carbon dioxide containing gas source and production step is using CO₂ from carbon capture units, including those with amine and membrane technology that are attached to the cement kiln lines, for carbonation of recycled concrete fines (recycled cement paste). This combination is favourable for the carbonation installations that are located in proximity of the cement plant and for remote carbonation units. The high concentration of CO₂ from the carbon capture units favours the transport of the CO₂ gas. The carbonation of the recycled cement paste can be performed in wet scrubbers, semi-dry scrubbers or dry scrubbers. Depending on the required reaction conditions, the gas containing CO₂ may require heating, or even dilution of the CO₂ concentration. Additionally, for such applications, the combination of carbonation and grinding is a preferred technology. For this purpose the gas may need to be heated and diluted. Furthermore, the gas may need to be mixed with gas containing water vapour to achieve the needed relative humidity during carbonation.

Another preferred combination is use of the carbon dioxide containing gas from carbon capture units, including those with amine and membrane technology that are attached to the cement kiln lines, for carbonation of Ca-and Mg-containing waste materials, for example but not exclusively fly ashes or slags from different industrial sources. This combination is favourable for carbonation installations that are located in proximity of the cement plant and for remote carbonation units. The high concentration of CO₂ from the carbon capture units favours the transport of the CO₂ gas. The carbonation of the waste materials can be performed in wet scrubbers, semi-dry scrubbers or dry scrubbers. Depending on the required reaction conditions, the gas containing CO₂ may require heating, or even dilution of the CO₂ concentration. Additionally, for such application, the combination of carbonation and grinding is a preferred technology. For this purpose the gas may need to be heated and diluted. Furthermore, the gas may need to be mixed with gas containing water vapour to achieve the needed relative humidity during carbonation. Moreover, the application of the autoclave technology is favourable here since some of the components of the fly ashes and slags are difficult to carbonate.

One specifically advantageous combination is use of the carbon dioxide containing gas from carbon capture units, including those with amine and membrane technology that are attached to the cement kiln lines, for the carbonation of natural materials containing Ca and Mg, for example but not excluding other materials olivine, serpentine, talc, MgO-containing minerals. This combination is favourable for carbonation installations that are located in proximity of the cement plant and for remote carbonation units. The high concentration of CO₂ from the carbon capture units favours the transport of the CO₂ gas. The carbonation of the Ca and Mg containing natural materials can be performed in wet scrubbers, semi-dry scrubbers or dry scrubbers. Depending on the required reaction conditions, the gas containing CO₂ may require heating, or even dilution of the CO₂ concentration. Additionally, for such application, the combination of carbonation and grinding is a preferred technology. For this purpose the gas may need to be heated and diluted. Furthermore, the gas may need to be mixed with gas containing water vapour to achieve the needed relative humidity during the carbonation. Moreover, the application of the autoclave technology is favourable here since some of the components of the fly ashes and slags are difficult to carbonate.

Another preferred combination is use of the carbon dioxide containing gas from the carbon capture units, including those with amine and membrane technology that are attached to the cement kiln lines, for carbonation hardening. This combination is favourable for precast concrete plants equipped with carbonation installations that are located in proximity of the cement plant so that concentration and transport of CO₂ gas can be avoided. However, the high concentration of the CO₂ in the exhaust gases also enables transportation of the CO₂ and installation of the carbonation units remote from the site of capturing. For this application the exhaust gases may need to be further treated to achieve a suitable carbonation temperature, CO₂ concentration and the required relative humidity in the carbonation chamber. Furthermore, the installation of storages capacities for CO₂ gas needs to be considered to account for the batch production of the concrete elements, if needed.

Carbon dioxide from Oxyfuel devices is specifically advantageous for direct on-site carbonation by any method. Especially favourable is semi-dry carbonation of concrete demolition waste or industrial alkaline waste materials since the medium concentration favours homogenization of the reaction bed.

Carbonation using direct flue gases is especially suitable for on-site carbonation and carbonation hardening. For carbonation, semi-dry and dry methods (reactive grinding) are favoured since the volume of gas is larger compared to gas from carbon capture technologies for a given CO₂.

The invention includes all combinations of described and especially of preferred features that do not exclude each other. If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

Especially preferred embodiments are defined in the following:

Embodiment 1: Method of utilizing carbon dioxide containing gas arising as waste or by-product in one or more of the following industrial processes:
- cement clinker production such as rotary kilns and/or calciner stages, oxyfuel kiln lines, or from separate calcination devices or indirect calcination of the calcium carbonate,
- carbon capture technologies, such as amine-based CO₂ scrubber and membrane-based gas separation, used e.g. for the exhaust gas of power plants, district heating plants, plants for the cogeneration of heat and electricity, as well as of manufacturing processes like steel making
   for providing a useful carbonation product by one or more of the following production steps:
   - carbonation of concrete demolition waste, especially recycled concrete fines, for the production of SCM or calcite and active silica,
   - carbonation of industrial alkaline waste materials, e.g. fly ashes, slags and other, for the production of SCM or calcite and active silica,
   - carbonation of natural materials, e.g. olivine, serpentine, talc, MgO-containing minerals, and other, for the production of SCM or calcite and active silica, and
   - carbonation hardening of binders,
      wherein the production step is selected based on the amount of carbon dioxide in the carbon dioxide containing gas, the additional substances present in the carbon dioxide containing gas and a temperature and pressure of the carbon dioxide containing gas.

Embodiment 2 is the method according to embodiment 1, wherein the carbon dioxide containing gas is from an amine-based CO₂ scrubber, preferably with a CO₂ concentration of at least 50 Vol.-%, 70 Vol.-% or 90 Vol.-%, and is used in a production step for providing carbonated recycled concrete fines, carbonated fly ashes, carbonated slags from iron production, carbonated slags from steel production, or carbonated bottom ashes for the production of SCM. In one preferred variant of this embodiment carbonation is carried out in a wet scrubber or semi-dry scrubber as described before. In another preferred variant of this embodiment carbonation of ashes or slags is carried out in an autoclave as described previously. In a further preferred variant of embodiment 2 carbonation is combined with grinding.

Embodiment 3 is the method according to embodiment 1, wherein the carbon dioxide containing gas is from membrane-based gas separation, preferably with a CO₂ concentration of at least 50 Vol.-%, 70 Vol.-% or 90 Vol.-%, and is used for carbonation hardening of binders, optionally after dilution of the CO₂ with ambient air.

Embodiment 4 is the method according to embodiment 1, wherein the carbon dioxide containing gas is from membrane-based gas separation, preferably with a CO₂ concentration of at least 50 Vol.-%, 70 Vol.-% or 90 Vol.-%, and is used in a production step for providing carbonated recycled concrete fines, carbonated fly ashes, carbonated slags from iron production, carbonated slags from steel production, or carbonated bottom ashes for the production of SCM. In one preferred variant of this embodiment carbonation is carried out in a wet scrubber as described before. In another preferred variant of this embodiment carbonation of ashes or slags is carried out in an autoclave as described previously. In a further preferred variant of embodiment 4 carbonation is combined with grinding.

Embodiment 5 is the method according to embodiment 1, wherein the carbon dioxide containing gas is from a separate calcination of calcium carbonate, e.g. for cement clinker production, and is used for carbonation hardening of binders, wherein batch calcination and batch carbonation are synchronized. In this embodiment the carbon dioxide containing gas is cooled or heated if necessary.

Embodiment 6 is the method according to embodiment 1, wherein the carbon dioxide containing gas is exhaust gas from cement clinker production in oxyfuel kiln lines and is used for providing carbonated recycled concrete fines, carbonated fly ashes, carbonated slags from iron production, carbonated slags from steel production, or carbonated bottom ashes for the production of SCM. In one preferred variant of this embodiment carbonation is carried out in a wet scrubber or semi-dry scrubber as described before. In another preferred variant of this embodiment carbonation of ashes or slags is carried out in an autoclave as described previously. In a further preferred variant of embodiment 6 carbonation is combined with grinding.

Embodiment 7 is the method according to embodiment 1, wherein the carbon dioxide containing gas is exhaust gas from cement clinker production in rotary kilns and/or calciner stages heated with oil, gas or waste as fuel and is used for carbonation hardening of binders.

Embodiment 8 is the method according to embodiment 1, wherein the carbon dioxide containing gas is exhaust gas from cement clinker production in rotary kilns and/or calciner stages heated with oil, gas or waste as fuel and is used for providing carbonated recycled concrete fines or carbonated waste materials like carbonated fly ashes, carbonated slags from iron production, carbonated slags from steel production, or carbonated bottom ashes, for the production of SCM. In one preferred variant of this embodiment carbonation is carried out in a wet scrubber or semi-dry scrubber as described before. In another preferred variant of this embodiment carbonation of ashes or slags is carried out in an autoclave as described previously. In a further preferred variant of embodiment 8 carbonation is combined with grinding.

Embodiment 9 is the method according to embodiment 1, wherein the carbon dioxide containing gas is from a separate calcination of calcium carbonate for CaO and/or MgO production and is used for carbonation hardening of binders, wherein batch calcination and batch carbonation are synchronized.

Embodiment 10 is the method according to embodiment 1, wherein the carbon dioxide containing gas is exhaust gas from cement clinker production in oxyfuel kiln lines and is used for providing carbonated natural materials, preferably carbonated olivine, carbonated serpentine, and/or carbonated talc, for the production of SCM. In one preferred variant of this embodiment carbonation is carried out in a wet scrubber or semi-dry scrubber as described before. In another preferred variant of this embodiment carbonation of ashes or slags is carried out in an autoclave as described previously. In a further preferred variant of embodiment 10 carbonation is combined with grinding.

Embodiment 11 is the method according to embodiment 1, wherein the carbon dioxide containing gas is exhaust gas from cement clinker production in rotary kilns and/or calciner stages heated with oil, gas or waste as fuel and is used for carbonation of waste materials, preferably fly ashes and slags, preferably in an autoclave and/or by a combination of carbonation and grinding, for the production of SCM. In one preferred variant of this embodiment carbonation is carried out in a wet scrubber or semi-dry scrubber as described before. In another preferred variant of this embodiment carbonation of ashes or slags is carried out in an autoclave as described previously. In a further preferred variant of embodiment 11 carbonation is combined with grinding.

Embodiment 12 is the method according to embodiment 1, wherein the carbon dioxide containing gas is exhaust gas from a separate calcination of calcium carbonate and is used for providing carbonated recycled concrete fines, carbonated fly ashes, carbonated slags from iron production, carbonated slags from steel production, or carbonated bottom ashes for the production of SCM. In one preferred variant of this embodiment carbonation is carried out in a wet scrubber or semi-dry scrubber as described before. In another preferred variant of this embodiment carbonation of ashes or slags is carried out in an autoclave as described previously. In a further preferred variant of embodiment 12 carbonation is combined with grinding.

Embodiment 13 is the method according to embodiment 2, 3, or 4, wherein the amine scrubber or membrane separation is installed in a coal, oil, gas or biomass fired power plant, waste incinerator, bio-mass or bio-gas fuelled district heating plant, cogeneration unit for heat and electricity, steel making plant, or cement, CaO and/or MgO manufacturing plant.

## Claims

1. Method of utilizing carbon dioxide containing gas arising as waste or by-product in one or more of the following industrial processes:
- cement clinker production such as rotary kilns and/or calciner stages, oxyfuel kiln lines, or from separate calcination devices or indirect calcination of the calcium carbonate,
- carbon capture technologies, such as amine-based CO₂ scrubber and membrane-based gas separation,
for providing a useful carbonation product by one or more of the following production steps:
- carbonation of concrete demolition waste, especially recycled concrete fines, for the production of SCM or calcite and active silica,
- carbonation of industrial alkaline waste materials, e.g. fly ashes, slags and other, for the production of SCM or calcite and active silica,
- carbonation of natural materials, e.g. olivine, serpentine, talc, MgO-containing minerals, and other, for the production of SCM or calcite and active silica, and
- carbonation hardening of binders,
wherein the production step is selected based on the amount of carbon dioxide in the carbon dioxide containing gas, the additional substances present in the carbon dioxide containing gas and a temperature and pressure of the carbon dioxide containing gas.

2. Method according to claim 1, wherein the carbon dioxide containing gas is from an amine-based CO₂ scrubber, preferably with a CO₂ concentration of at least 50 Vol.-%, 70 Vol.-% or 90 Vol.-%, and is used in a production step for providing carbonated recycled concrete fines, carbonated fly ashes, carbonated slags from iron production, carbonated slags from steel production, or carbonated bottom ashes for the production of SCM, preferably in a wet scrubber or semi-dry scrubber.

3. Method according to claim 1, wherein the carbon dioxide containing gas is from membrane-based gas separation, preferably with a CO₂ concentration of at least 50 Vol.-%, 70 Vol.-% or 90 Vol.-%, and is used for carbonation hardening of binders, optionally after dilution of the CO₂ with ambient air.

4. Method according to claim 1, wherein the carbon dioxide containing gas is from membrane-based gas separation, preferably with a CO₂ concentration of at least 50 Vol.-%, 70 Vol.-% or 90 Vol.-%, and is used in a production step for providing carbonated recycled concrete fines, carbonated fly ashes, carbonated slags from iron production, carbonated slags from steel production, or carbonated bottom ashes for the production of SCM, preferably in a wet scrubber or by a combination of grinding and carbonation.

5. Method according to claim 1, wherein the carbon dioxide containing gas is from a separate calcination of calcium carbonate for cement clinker production and is used for carbonation hardening of binders, wherein batch calcination and batch carbonation are synchronized.

6. Method according to claim 1, wherein the carbon dioxide containing gas is exhaust gas from cement clinker production in oxyfuel kiln lines and is used for providing carbonated recycled concrete fines, carbonated fly ashes, carbonated slags from iron production, carbonated slags from steel production, or carbonated bottom ashes for the production of SCM, preferably in a semi-dry scrubber.

7. Method according to claim 1, wherein the carbon dioxide containing gas is exhaust gas from cement clinker production in rotary kilns and/or calciner stages heated with oil, gas or waste as fuel and is used for carbonation hardening of binders.

8. Method according to claim 1, wherein the carbon dioxide containing gas is exhaust gas from cement clinker production in rotary kilns and/or calciner stages heated with oil, gas or waste as fuel and is used for providing carbonated recycled concrete fines or carbonated waste materials like carbonated fly ashes, carbonated slags from iron production, carbonated slags from steel production, or carbonated bottom ashes, for the production of SCM, preferably in a semi-dry or dry scrubber or by a combination of grinding and carbonation.

9. Method according to claim 1, wherein the carbon dioxide containing gas is from a separate calcination of calcium carbonate for CaO and/or MgO production and is used for carbonation hardening of binders, wherein batch calcination and batch carbonation are synchronized.

10. Method according to claim 1, wherein the carbon dioxide containing gas is exhaust gas from cement clinker production in oxyfuel kiln lines and is used for providing carbonated natural materials, preferably carbonated olivine, carbonated serpentine, and/or carbonated talc, for the production of SCM, preferably in a semi-dry scrubber or autoclave.

11. Method according to claim 1, wherein the carbon dioxide containing gas is exhaust gas from cement clinker production in rotary kilns and/or calciner stages heated with oil, gas or waste as fuel and is used for carbonation of waste materials, preferably fly ashes and slags, preferably in an autoclave and/or by a combination of carbonation and grinding, for the production of SCM.

12. Method according to claim 1, wherein the carbon dioxide containing gas is exhaust gas from a separate calcination of calcium carbonate and is used for providing carbonated recycled concrete fines, carbonated fly ashes, carbonated slags from iron production, carbonated slags from steel production, or carbonated bottom ashes for the production of SCM, preferably in an autoclave and/or by a combination of grinding and carbonation.
